Europäisches Patentamt

**European Patent Office**

**Office européen des brevets**

(11) Publication number: **0 274 223**
**A1**

# EUROPEAN PATENT APPLICATION

(21) Application number: **87310671.0**

(22) Date of filing: **03.12.87**

(51) Int. Cl.⁴: **H01S 3/08** , H01S 3/06 ,
H01S 3/045

(30) Priority: **20.12.86 GB 8630494**

(43) Date of publication of application:
**13.07.88 Bulletin 88/28**

(84) Designated Contracting States:
**CH DE FR GB IT LI NL**

(71) Applicant: **LUMONICS LTD.**
**Cosford Lane**
**Swift Valley Rugby Warwickshire, CV21**
**1QN(GB)**

(72) Inventor: **Ireland, Clive Lionel Michael**
**88 Hillmorton Road**
**Rugby Warwickshire CV22 5AH(GB)**
Inventor: **Burrows, Graham**
**4 Montague Road**
**Bilton Rugby Warwickshire CV22 6NA(GB)**

(74) Representative: **Evershed, Michael et al**
**Saunders & Dolleymore 9, Rickmansworth**
**Road**
**Watford Hertfordshire WD1 7HE(GB)**

(54) **High power laser.**

(57) A laser comprises an elongate element of rectangular cross-section (11) formed of active material, a pair of flash lamps (14,15), a prism (12), and a semi-transparent output mirror (13). The prism (12) divides the element (11) optically into two halves. Thus, a beam emerging from one half of the element (11) is reflected by the prism (12) so that the reflected beam passes through the other half of element (11). Consequently, the reflected beam experiences an optical environment different from the emergent beam. This provides first order compensation for the variation in refractive index caused by heat flow through element (11). In an alternative arrangement, the prism (12) is replaced by a mirror and the adjacent end of element (11) is divided into two inclined faces. In another alternative arrangement, the element has a circular cross-section and an axiconical prism or mirror is used in place of prism (12).

Fig 1

## HIGH POWER LASER

This invention relates to a laser capable of operating at a high average power.

When a laser is operated at a high average power, the optical pumping of the active material causes a considerable amount of heat to be generated in the active material. This heat generation causes temperature gradients to occur in the thermal material and it also causes the central part of the active material to be in compression and the outer part to be in tension. As the refractive index of active material is a function of both temperature and stress, the resulting variation in refractive index causes a distortion to beams passing through the active material. The variation of refractive index also produces strong optical lensing. Self-destruction of the active material can occur at high optical pumping powers due to the thermally induced stresses.

In U.S. patent 3 633 126, there is described a laser in which the active material is slab-shaped and the beam zig-zags internally between two polished faces. As each ray of the beam passes through identical but mixed optical environments, this arrangement provides compensation for the distortion of the beam and for the optical lensing. However, this arrangement suffers from the problems that it is difficult to obtain a high quality optical finish on two large parallel faces and it is difficult to maintain this finish when the laser is in use and these faces are being cooled.

It is accordingly an object of this invention to provide a new or improved high power laser in which the above mentioned problems are overcome or reduced.

According to this invention there is provided a laser comprising an elongate solid element formed from active laser material, means for pumping said elongate element to achieve a population inversion of atoms in the active material, and reflecting means adjacent one end of the elongate element, said reflecting means being arranged to reflect a beam of electro-magnetic radiation emerging from said one end of the body so that the reflected beam traverses said element with its axis spaced apart from the axis of the emergent beam.

With this arrangement, each ray of the reflected beam passes through an optical environment which is different from that experienced by the same ray in the emergent beam and this provides full or partial compensation for the variation of refractive index within the active material.

In one arrangement, said elongate element has a substantially rectangular cross-section.

Where the elongate element has a rectangular cross-section, the reflecting means may be a prism.

Alternatively, where the elongate element has a rectangular cross-section, the reflecting means may be a mirror, said one end of the elongate element being divided into two planar faces lying in planes inclined relative to each other.

Where the elongate element has a rectangular cross-section, the laser may include means for passing a cooling fluid along one side face, or alternatively two opposite side faces, of said elongate element.

By cooling the elongate element by passing cooling fluid along one or two opposite side faces, the heat flow in the element is one dimensional. Consequently, the orientation of the optical axes of the induced birefringence do not change with position in the aperture of the elongate element and so a polarised beam can be transmitted without depolarisation.

In another arrangement, the elongate element has a circular cross-section and said reflecting means may comprise an axiconical prism or mirror.

Preferably, the active material is a material whose refractive index is substantially invariant with respect to temperature.

By using an active material whose refractive index is substantially invariant with temperature, the distortion of the beam and the lensing caused by variation of the refractive index is further reduced.

This invention will now be described in more detail, by way of example, with reference to the drawings in which:

Figure 1 is a diagram of a laser embodying this invention;

Figure 2 is a diagrammatic cross-section of the laser of Figure 1;

Figure 3 is a diagram of another laser embodying this invention; and

Figure 4 is a diagram of a laser beam amplifier embodying this invention.

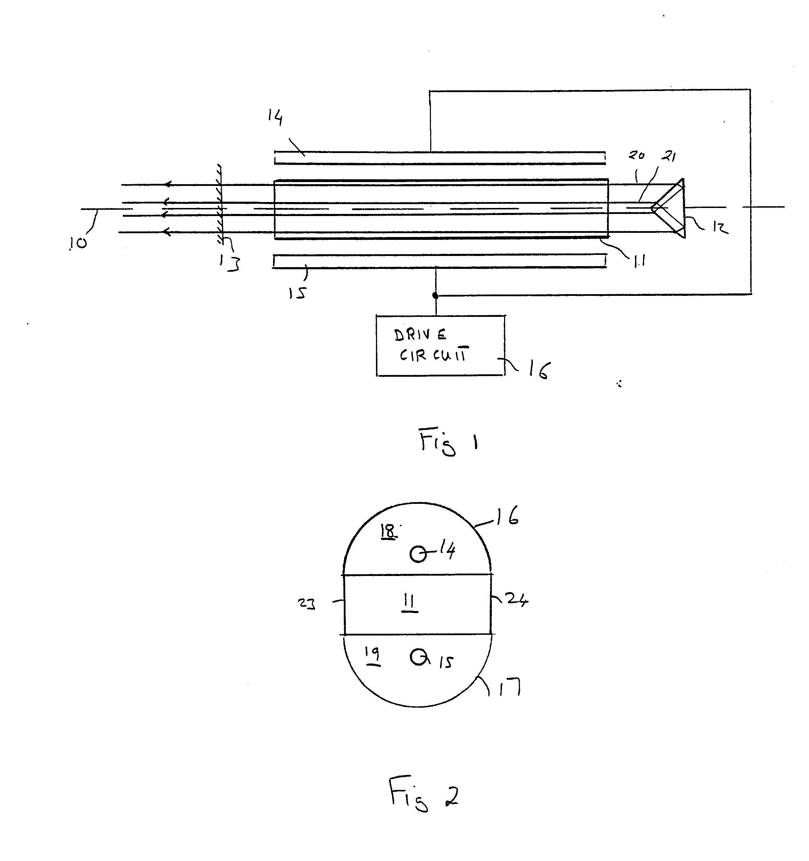

Referring to Figure 1 there is shown a laser which is designed to operate at a high average power and which is arranged as an oscillator. The laser has an optical axis 10. An elongate element 11 formed from active material and which has a rectangular cross-section is symmetrically disposed relative to the axis 10. An optical prism 12 having a triangular cross-section is disposed adjacent one end of the element 11 and is also arranged symmetrically with reference to axis 10. A semi-transparent output mirror 13 is disposed adjacent the other end of the element 11 and is also symmetrically arranged relative to the axis 10.

The active material of element 11 is pumped by a pair of conventional flash tubes 14, 15 each of which extends along one side of element 11. The flash tubes 14, 15 are driven by a conventional drive circuit 16. By way of modification, the laser may have only a single flash tube.

Flashlamps for pulsed lasers are discussed in a paper entitled "A guide to flashlamps for pulsed solid state lasers", Technical Bulletin 2, ILC Technology, Sunnyvale, California, USA. The design of drive circuits is discussed in a paper entitled "Design of flashlamps driving circuits", J.P. Markiewicz and J.L Emmett, IEEE Journal of Quantum Electronics, vol. QE-2, No. 11, November 1966.

Referring now to Figure 2, the flash tubes 14, 15 are enclosed respectively by a pair of semi-cylindrical shells 16, 17. The shells 16, 17 provide passages 18, 19 along which, in use, cooling fluid is passed so as to remove heat generated in the active material.

In operation, when the active element 11 is pumped by flash lamps 14, 15, laser light is completely reflected by the prism 12 and partly reflected by the output mirror 13 thereby causing the laser to oscillate to produce an output beam as indicated by the arrows to the left of mirror 13. As a result of pumping the active element 11, a considerable amount of waste heat is generated in this element and this heat is removed by fluid passing through passages 18, 19. This flow of heat causes a temperature gradient inside the element 11 and it also causes the central part of element 11 to be in compression and its outer part to be in tension. The variation in temperature and in stress causes a corresponding variation in the refractive index of the material of element 11. However, the arrangement shown in Figures 1 and 2 provides first order compensation for this variation of refractive index as will now be explained.

The prism 12 divides the element 11 optically into two halves. Thus, a beam passing through the upper half of element 11 is reflected by prism 12 so that the reflected beam passes through the lower half of element 11. Similarly, a beam passing from left to right through the lower half of element 11 is reflected by prism 12 so that the reflected beam passes through the upper half of element 11. Thus, after reflection by prism 12, the individual rays of the reflected beam will experience optical environments which are different from those experienced by the respective rays during their previous passage through element 11. This provides averaging of optical paths for rays oscillating in the laser and first order compensation for the variation in refractive index thereby reducing beam distortion and the tendency for the beam to be focussed by optical lensing in element 11.

By way of illustration, a pair of rays 20 and 21 may be considered. During passage from left to right in the upper half of element 11, ray 20 is adjacent the surface of element 11 and ray 21 is adjacent the optical axis. Thus, during this passage through element 11, ray 20 experiences an environment cooler than that experienced by ray 21 and ray 20 passes through a part of the element which is in tension whilst ray 21 passes through a part which is in compression. After reflection by prism 12, these environments are reversed. Thus, during passage from right to left through the lower half of element 11, ray 20 is adjacent to the optical axis 10 and ray 21 is adjacent to the surface of element 11.

Because the element 11 is cooled by fluid passing through passages 18 and 19 on opposite sides of element 11, the heat flow through element 11 is substantially one dimensional. The compression and tension in element 11 induce birefringence in this element. However, because the heat flow is one dimensional, the optical axes of the induced birefringence is invariant with position in the rectangular cross-section of element 11. Thus, a polarised beam can pass through element 11 without significant depolarisation and so the general arrangement shown in Figures 1 and 2 is suitable where it is required to use a polarised beam. In order to ensure that the heat flow is substantially one dimensional in the vicinity of edges 23 and 24 of element 11, these edges may be covered with thermally insulating material.

Although the prism 12 provides compensation for variation of refractive index, it is desirable to minimise this variation. In order to achieve this, the active material of element 11 is selected from active materials whose refractive index is substantially invariant with temperature. Examples of such materials are Nd-YLF and Nd-phosphate glass.

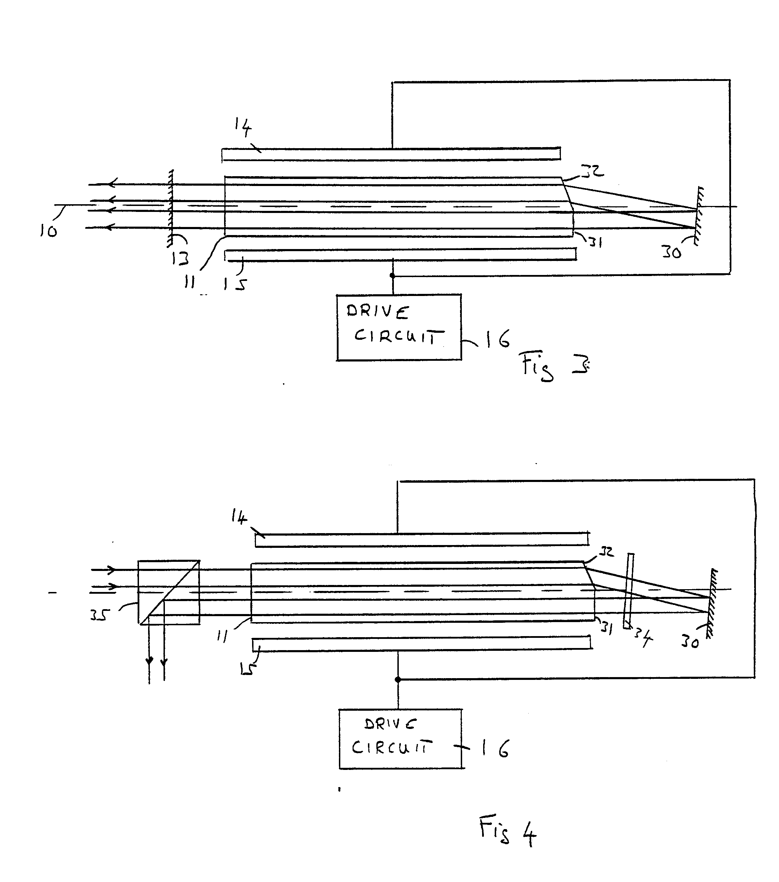

Referring now to Figure 3, there is shown another laser arranged as an oscillator and which is generally similar to the laser of Figure 1 and like parts are denoted by the same reference numerals. In the laser of Figure 3, the prism 12 is replaced by a fully reflecting mirror 30 which is inclined relative to a plane normal to the optical axis 10. Also, in Figure 3, the end of the active element 11 is divided into a lower face 31 and an upper face 32. The lower face 31 lies in a plane normal to the optical axis 10 and the upper face 32 is inclined to this plane. The mirror 30 together with faces 31 and 32 divide the element 11 optically into two halves in the same manner as that achieved by prism 12.

Referring now to Figure 4, there is shown a laser designed to operate at high average powers and arranged as an amplifier. The laser of Figure 4 includes several components which are the same as those shown in Figure 3 and these are denoted by the same reference numerals. The laser of Figure 4 also includes a plate 34 of birefringent material positioned between mirror 30 and the adjacent end of the element 11. The thickness and orientation of plate 34 is chosen so as to rotate the direction of polarisation of a polarised beam through 90° after passing through plate 34 twice. In place of output mirror 13, the laser of Figure 4 has a polariser 35.

In operation, an input beam is polarised by polariser 35, amplified during passage through element 11 from left to right, reflected from mirror 30 with the direction of polarisation being rotated by 90° during the two passages through place 34, amplified during further passage through element 11, and the resulting beam is then rejected by polariser 35 to produce the output beam.

As mentioned above, the one dimensional nature of heat flow in element 11 permits a polarised beam to pass therethrough without depolarisation. Where it is not required to maintain polarisation, the element 11 may be replaced by an element of active material having a different geometry. For example, referring to Figure 1, the element 11 may be replaced by a rod having a circular cross-section. In this case, the prism 12 is replaced by an axiconical prism or mirror. Where a rod shaped element is used, it is still desirable to use an active material whose refractive index does not vary substantially with temperature and it is preferable to use a material which has a strong residual birefringence if efficient use with a polarised beam is required from a rod element. The active materials discussed above may also be used with a rod shaped element.

## Claims

1. A laser comprising an elongate solid element (11) formed from active laser material, means (14,15) for pumping said elongate element (11) to achieve a population inversion of atoms in the active material and reflecting means (12;30) adjacent one end of the elongate element (11), characterised in that said reflecting means (12;30) is arranged to reflect a beam of electro-magnetic radiation emerging from said one end of said elongate element (11) so that the reflected beam traverses said element (11) with its axis spaced apart from the axis of the emergent beam.

2. A laser as claimed in Claim 1, characterised in that said elongate element (11) has a substantially rectangular cross-section.

3. A laser as claimed in Claim 2, characterised in that said reflecting means is a prism (12).

4. A laser as claimed in Claim 2, characterised in that said reflecting means is a mirror (30), said one end of said elongate (11) being divided into two planar faces (31,32) lying in planes inclined relative to each other.

5. A laser as claimed in any one of Claims 2 to 4, characterised in that the laser includes means (16,17,18,19) for passing a cooling fluid along one side face, or alternatively two opposite side faces, of said elongate element (11).

6. A laser as claimed in Claim 1, characterised in that the elongate element has a circular cross-section.

7. A laser as claimed in Claim 6, characterised in that said reflecting means comprises an axiconical prism.

8. A laser as claimed in Claim 6, characterised in that said reflecting means comprises an-axiconical mirror.

9. A laser as claimed in any one of the preceding claims, characterised in that the active material is a material whose refractive index is substantially invariant with respect to temperature.

14

20 21

10

13

15

11

12

DRIVE
CIRCUIT 16

Fig 1

16

18

14

23 11 24

19 15

17

Fig 2

14

32

10

13

11  15

30

31

DRIVE
CIRCUIT  16

Fis 3

14

32

35

11

31  34  30

15

DRIVE
CIRCUIT  16

Fis 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 660 779 (D.W. CUFF et al.) * Column 3, line 48 - column 4, line 5; figure 5 * | 1,3,7 | H 01 S 3/08<br>H 01 S 3/06<br>H 01 S 3/045 |
| Y | | 2,4-6,8 | |
| D,Y | US-A-3 633 126 (W.M. SCHENECTADY et al.) * Abstract; figures 1-7 * | 2,4,5,8 | |
| Y | FR-A-2 367 364 (OWENS-IILINOIS) * Figures 1,5,8 * | 4,6 | |

TECHNICAL FIELDS
SEARCHED (Int. Cl.4)

H 01 S

The present search report has been drawn up for all claims

| Place of search | Date of completion of the search | Examiner |
|---|---|---|
| THE HAGUE | 09-02-1988 | MALIC K. |

EPO FORM 1503 03.82 (P0401)